# EUROPEAN PATENT SPECIFICATION

(11) **EP 1 980 670 B1**
(45) Date of publication and mention of the grant of the patent: **15.07.2009**
(21) Application number: 07007402.6
(22) Date of filing: 11.04.2007
(51) Int. Cl.: E02B 17/00, E02B 17/02, E02D 15/08, E02D 27/52, F03B 13/26, E02B 9/08

(54) **Method for the deployment of a hydroelectric turbine**
Verfahren zum Einsetzen einer hydroelektrischen Turbine
Procédé pour le déploiement d'une turbine hydroélectrique

(43) Date of publication of application: 15.10.2008
(60) Divisional application: 08014908.1
(73) Proprietor: OpenHydro Group Limited, Dublin 2 (IE)
(72) Inventor: Ives, James, Dublin 2 (IE); Dunne, Paul, Drumcondra Dublin 9 (IE)
(74) Representative: O'Neill, Brian

(56) References cited:
- WO-A-01/34977
- WO-A-20/04015264

## Description

### Field of the Invention

The present invention is concerned with a system and method for the deployment of a hydroelectric turbine, and in particular a system and method which significantly simplifies the transportation of a hydroelectric turbine and associated base to a deployment site, in addition to simplifying the subsequent deployment of the turbine and base to the seabed.

### Background of the Invention

Due to the environmental damage which has been inflicted on the planet as a result of the burning of fossil fuels, renewable energy has finally begun to be given significant attention, with many projects being developed around solar energy, wind energy, and tidal power. Of these alternative forms of energy, tidal power is arguably the most attractive, given that tidal flows are entirely predictable and constant, unlike wind or solar energy which are relatively intermittent and therefore less dependable.

However, harnessing tidal energy does provide its own challenges, in particular with respect to the installation and maintenance of tidal power generators, for example hydroelectric turbines, which by the very nature of the operation of same must be located in relatively fast flowing tidal currents, and more than likely located on the seabed. In addition, in order to be economically viable these turbines must be built on a large scale. As a result the turbines and associated bases/supports are large and cumbersome components, and require significant heavy lifting and transport equipment in order to achieve deployment. The use of such heavy lifting equipment is normally a hazardous undertaking, and is rendered even more dangerous when this equipment is operated at sea under difficult and unsteady conditions.

The installation process is further complicated by an increasing shortage in the market of suitable vessels and equipment to perform such drilling work and the extreme danger of engaging divers in high tidal flow sites.

WO 01/34977 discloses a method and a system for installing an offshore wind power station (1) at sea and/or transporting one from sea e.g. for maintenance, said wind power station comprising a base (2) to be set on the sea bottom, and a tower (3) attached to the base, which wind power station is transported to a place of installation at sea by means of a transport vessel (4) and lowered to the sea bottom and/or lifted off the sea bottom and transported to land/ashore by means of a transport vessel. The wind power station is lowered by adding ballast water into a ballast water tank (6, 7) provided in the wind power station, and raised by reducing the amount of ballast water in the ballast water tank. The wind power station comprises a ballast water tank (6, 7).

WO2004/015264 discloses an apparatus for guiding a module (2) onto a foundation (3), for a subsea plant for the production of power from currents in bodies of water. The foundation (3) includes an area adapted for being connected to the module (2). The module (2) is adapted for being placed on the foundation (3) from a surface based vessel by means of a winch. The apparatus includes at least two receiving elements (12) with respective locking apparatuses, situated at a joining area of the foundation (6). Guiding posts (13) are adapted to be lowered down into the receiving elements (12) to be secured to the receiving elements by means of the locking apparatuses, and the guiding wire extends between the surface based vessel and the guiding posts (13). At least two guiding tunnels (16) are provided on the module in a distance adapted to the localisation of the receiving elements (12). The guiding tunnels (16) are furthermore adapted for threading of the guiding wires (14) therein and for entering onto the guiding posts. A conical pipe (17) is placed at the underside of the module for entering into the foundation, and this is adapted to mate with the conical pipe (17). A securing apparatus is provided for securing the module (2) to the foundation (3), and a lifting wire extends between the module and the winch secured to the surface based vessel for raising and lowering the module (2) between the surface based vessel and the foundation along the guiding wire (14).

The present invention has therefore been developed with a view to simplifying the deployment of hydroelectric turbines, and which system and method allow the deployment of a hydroelectric turbine which has been pre-installed on a base.

### Summary of the Invention

According to the present invention there is provided a method of deploying a hydroelectric turbine comprising the steps of;
securing a base for the turbine beneath a vessel;
securing the turbine to a support of the base which projects upwardly through the vessel; transporting the vessel to a deployment site;
releasing the base from beneath the vessel;
and in the step of releasing the base from beneath the vessel, allowing the turbine to pass through the vessel.

Preferably, the method comprises, in the step of securing the base, locating the base on the bottom of a body of water;
positioning the vessel above the base;
and raising the base into position beneath the vessel.

Preferably, the method comprises the step of securing one or more lifting lines to the base prior to locating the base on the bottom of the body of water.

Preferably, the method comprises, in the step of raising the base into position beneath the vessel, utilizing load bearing means on the vesseL

Preferably, the method comprises the further step of adding ballast to the base subsequent to securing the base beneath the vessel.

Preferably, the method comprises securing the support to the base subsequent to securing the base beneath the vessel.

Preferably, the method comprises the further step of testing various operating parameters of the base and/or turbine at a test location prior to deploying the base at the deployment site.

### Brief Description of the Drawings

Figure 1 illustrates a base for a turbine standing on a quay;
Figure 2 illustrates the base of figure 1 having being lowered to the seabed adjacent the quay;
Figure 3 illustrates a deployment vessel floating above the base and adjacent the quay;
Figure 4 illustrates the vessel of figure 3, following the raising of the base into position directly beneath the vessel;
Figure 5 illustrates the vessel and base of figure 4, in which a pair of supports have been secured through the vessel to the base;
Figure 6 illustrates the vessel and the base of figure 5, following the connection of a hydroelectric turbine to the supports; and
Figure 7 illustrates the vessel positioned at a deployment site, lowering the base and turbine towards the seabed.

### Detailed description of the drawings

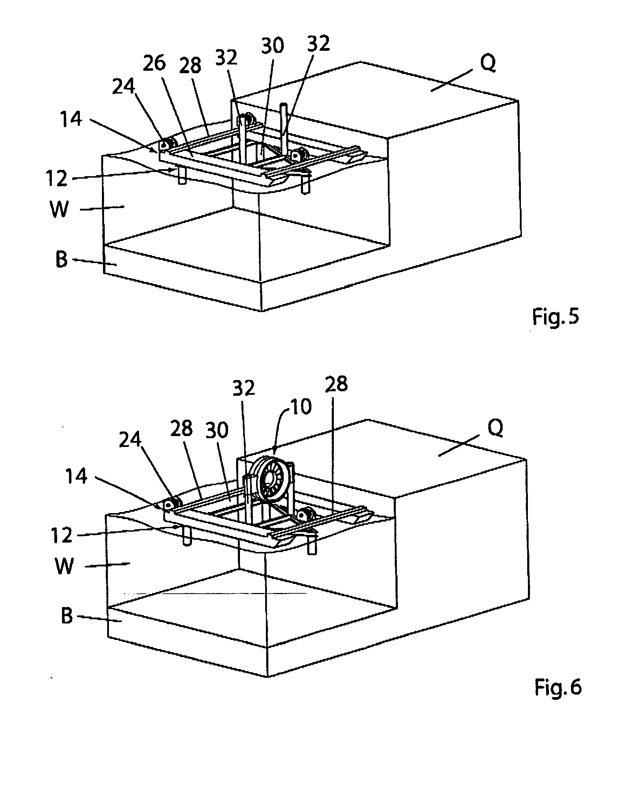

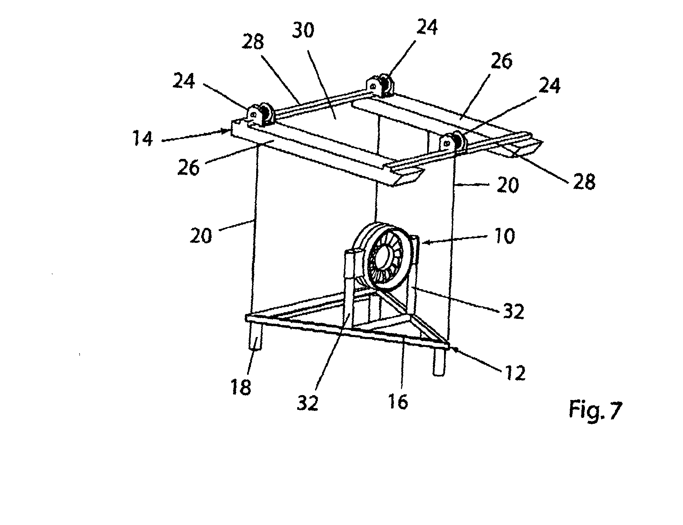

Referring now to the accompanying drawings, there is described and shown a system and method for the deployment of a hydroelectric turbine 10 (only shown in figures 6 and 7), which system comprises the use of a base 12 for the turbine 10, and a vessel 14 to which the base 12 may be coupled, as will be described hereinafter in detail. The system and method of the invention, as will become apparent, substantially avoids the requirement for the use of heavy lifting equipment in the deployment of the hydroelectric turbine 10, and thus significantly simplifies the deployment process.

In the embodiment illustrated the base 12 comprises a triangular frame 16 having three legs 18, although it will be understood from the following description of the system and method of the invention that the base 12 is an exemplary embodiment and could be of any other shape and/or configuration. In order to begin deployment, the base 12 is positioned on a quay Q beside a body of water W, for example the sea. The base 12 may be transported to the quay Q fully assembled, or more preferably may be assembled on the quay Q from the component parts thereof.

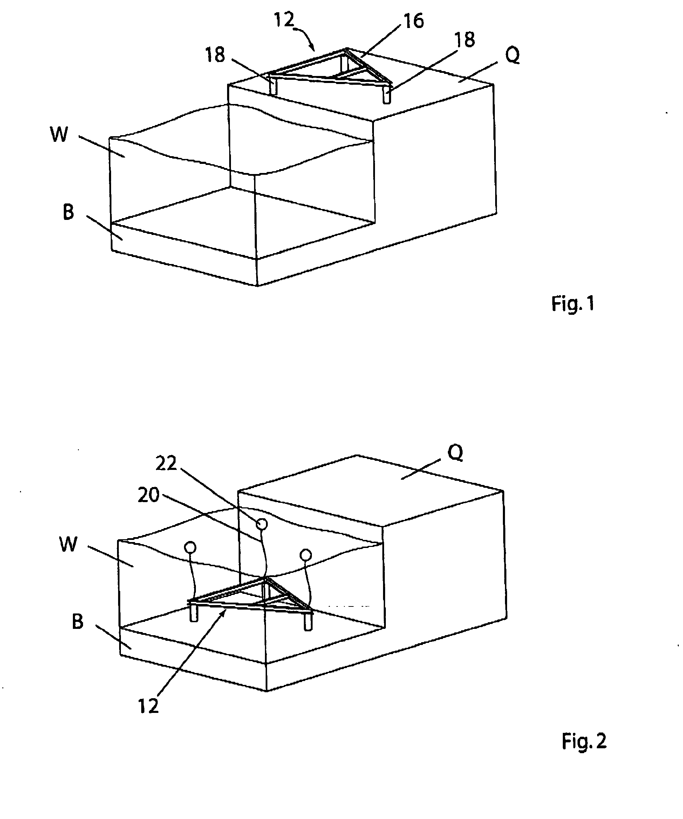

Referring then to figure 2, the base 12 is raised off the quay Q and lowered onto the seabed B adjacent to the quay Q. At this point the frame 12 is relatively lightweight and can be manoeuvred off the quay Q using a relatively small crane (not shown) or the like.
A lifting line 20 and associated buoy 22 is connected to each corner of the base 12, preferably prior to lowering of the base 12 onto the seabed B. The number of lifting lines 20 may be varied depending on the size and shape of the base 12, or to meet any other operational requirements.

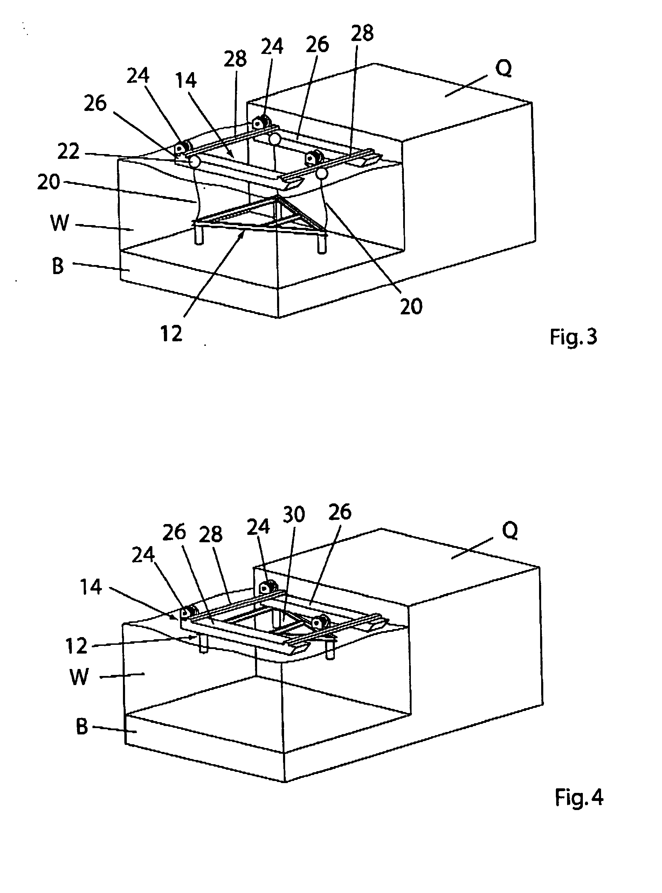

Referring now to figure 3, the vessel 14 is manoeuvred into position directly above the base 12, beside the quay Q. The vessel 14 is provided with load bearing means in the form of three winches 24, to each of which winches 24 one of the lifting lines 20 can be secured. The winches 24 can thus be used to raise the base 12 into a position beneath the vessel 14, as illustrated in figure 4. It will of course be appreciated that any other functional equivalent to the winches 24 could be employed, and indeed the number of winches 24 and the positions thereof may be varied as required. The vessel 14 and/or base 12 may be provided with locking means (not shown) adapted to secure the base 12 to the underside of the vessel 14 once winched into position. The load will therefore be removed from the winches 24 once the base 12 is locked in position- The winches 24 may however serve as this locking means.

It can be seen that the vessel 14, in the embodiment illustrated, is comprised of a pair of hulls in the form of pontoons 26, which are connected to one another by a pair of cross members 28. The space between the cross members 28 is left empty such as to define a portal 30 in the vessel 14. The base 12 can therefore be accessed through the portal 30 from above the vessel 14. Thus referring to figure 5 a pair of supports 32 are now connected to the base 12, which work can be undertaken from onboard the vessel 14. As used herein, the term "support" is intended to mean any system or mechanism which enables the turbine 10 to be connected to the base 12 in a suitable fashion, and may not necessarily be of the upright nature depicted by the pair of supports 32 illustrated.

As the base 12 is now safely secured beneath the vessel 14, if required ballast can be added to the base 12 in order to bring the weight of the base 12 to a level which will allow the base 12 and turbine 10 to sit securely on the seabed under their own weight. As this ballast is only added at this stage, the winches 24 do not need to bear this extra load when raising the base 12 into position beneath the vessel 14. The adding of ballast at this stage also ensures that when the base 12 is first lifted off the quay Q and lowered to the seabed B, the crane undertaking the lift does not have to bear the weight of the ballast, and so a relatively small crane can be employed.

Turning then to figure 6, the turbine 10 is now lifted onto the base 12, and in particular the supports 32, again using a relatively small crane positioned on the quay Q. The turbine 10 is then secured to the supports 32 and is then ready to be transported to a deployment site out at sea.

It is envisaged that as this turbine based technology matures, the turbines will grow in size, and so therefore will the distance between the hulls or pontoons 26. However, the winch 24 which is located on the middle of the front cross member 28 will be carrying a significant load, and is not supported. It is thus envisaged that the design of the vessel 14 for larger turbines (or indeed if two or more turbines 10 are to be mounted side by side on a single base 12) will take some form other than a catamaran design, for example a tri-maran. The modular nature of the vessel 14 would make such a modification possible and readily achievable.

In addition, the modular nature of the vessel 14 enables the vessel 14 to be easily dismantled and shipped around the world to the next installation site in the hull of a large cargo ship. This approach may save time as the larger cargo ships are able to travel in far worse conditions than the vessel 14. The modular approach also means that the vessel 14 could be reconfigured in the future for different shaped bases 12, i.e. when deploying a larger turbine it may be desirable to widen the distance between the hulls 26, which could be easily done by lengthening the cross members 28. This has obvious cost savings as it is not necessary to build a completely new vessel.

Another advantage embodied by the shape of the vessel 14 is that it is easy to tow as there is very little resistance, as the cross members 28 are positioned to be out of the water and so only the pontoons 26 are sitting in the water. This design will align itself with the tidal flow compared with an alternate design having the cross members submerged. The latter design will be less streamlined and less likely to be in line with the flow. This is an important feature when deploying the turbine 10 when there is some tide running as when the turbine 10 is lowered, the vessel 14 will be orientated correctly to the tide and so the turbine 10 will be automatically deployed in the correct orientation.

The modular approach to the design of the vessel 14 also allows additional equipment to be quickly and easily mounted to the vessel 14 for use during the installation process. Platforms (not shown) supporting such equipment can be easily connected to the vessel 14 using conventional modular connectors (not shown).

Referring to figure 7, once the vessel 14, base 12 and turbine 10 have been positioned above the deployment site the base 12 and turbine 10 can be lowered into position. This is a simple process of unwinding the winches 24 which will allow the base 12 to fall away from beneath the vessel 14. If any locking means (not shown) are provided on the base 12 and/or vessel 14 they will need to be released before unwinding the winches 24. The portal 30 in the vessel 14 is shaped and dimensioned to enable the turbine 10 to pass downwardly through the portal 30, and thus the combined turbine 10 and base 12 can be lowered together from the vessel 14. No further work must then be done in securing the two together when the base 12 has been positioned on the seabed B, thereby greatly simplifying the deployment process. In addition, no lifting equipment such as cranes or the like are required to be operated from onboard the vessel 14.

The connectivity between the base 12 and vessel 14 also allows the above process to be carried out in reverse, in order to allow the base 12 and turbine 10 to be retrieved from the seabed B. The vessel 14 is positioned over and connected to the base 12, which can then be winched into position beneath the vessel 12, and securely connected therebeneath for transport back to shore or any other desired location.

It is preferable, prior to transporting the turbine 10 to the deployment site, that various tests are undertaken on the turbine 10 and the base 12 while positioned adjacent to the quay Q. Thus referring to figure 6, once the turbine 10 has been secured to the base 12, the base 12 and turbine 10 are lowered to the seabed B, while the vessel 14 remains adjacent the quay Q. The lifting lines 20 are left secured between the base 12 and vessel 14 while the base 12 is positioned on the seabed B, in order to allow the base 12 and turbine 10 to be quickly and easily retracted into position beneath the vessel 14 for transport to the deployment site illustrated in figure 7. When the base 12 is positioned on the seabed B, various tests can be carried out, for example testing/calibration of telemetry sensors (not shown) or the like positioned on the base 12 and/or turbine 10. Once said testing has been completed, the base 12 is winched back into position beneath the vessel 14, and the turbine 10 is then again positioned above deck of the vessel 14. The vessel 14 can then be transported to the deployment site as described herein before with reference to figure 7. If this testing reveals any problems with any aspect of the turbine 10 or base 12, both can quickly be removed from the water W due to being still positioned adjacent the quay Q. Indeed if there is only a problem with some aspect of the turbine 10, then the turbine 10 could be released from the base 12 and taken onto the quay for further testing and/or repair. The base 12 could then be left secured beneath the vessel 14 to await the return of the repaired turbine 10.

It is envisaged that the system of the invention may be used to deploy the base 12 onto the seabed B without the turbine 10 mounted thereto, which would then be subsequently connected to the base 12 by suitable means.

It will therefore be appreciated that the system and method of the present invention provide a simplified yet highly efficient means of deploying a hydroelectric turbine 10, and minimises the requirement for heavy lifting equipment, eliminating the need for the use of such equipment on board the vessel 14, in particular at the deployment site.

The invention is not limited to the embodiment described herein but can be amended or modified without departing from the scope of the present invention, as defined by the claims.

## Claims

1. A method of deploying a hydroelectric turbine (10) comprising the steps of;
securing a base (12) for the turbine (10) beneath a vessel (14);
securing the turbine (10) to a support (32) of the base (12) which projects upwardly through the vessel (14);
transporting the vessel to a deployment site;
releasing the base from beneath the vessel;
and in the step of releasing the base from beneath the vessel,
allowing the turbine to pass through the vessel.

2. A method according to claim 1 comprising, in the step of securing the base (12),
locating the base (12) on the bottom of a body of water;
positioning the vessel (14) above the base (12);
and raising the base (12) into position beneath the vessel (14).

3. A method according to claim 2 comprising the step of securing one or more lifting lines (20) to the base (12) prior to locating the base (12) on the bottom of the body of water.

4. A method according to claim 2 or 3 comprising, in the step of raising the base (12) into position beneath the vessel (14), utilizing load bearing means (24) on the vessel (14).

5. A method according to any of claims 1 to 4 comprising the further step of adding ballast to the base (12) subsequent to securing the base (12) beneath the vessel (14).

6. A method according to any of claims 1 to 5 comprising securing the support (32)to the base (12) subsequent to securing the base (12) beneath the vessel (14).

7. A method according to any of claims 1 to 6 comprising the further step of testing various operating parameters of the base (12) and/or turbine (10) at a test location prior to deploying the base (12) at the deployment site.

## Patentansprüche

1. Verfahren des Einsetzens einer hydroelektrischen Turbine (10), das folgende Schritte umfasst;
Befestigen eines Sockels (12) für die Turbine (10) unter einem Wasserfahrzeug (14);
Befestigen der Turbine (10) an einer Halterung (32) des Sockels (12), die durch das Wasserfahrzeug (14) nach oben ragt;
Befördern des Wasserfahrzeugs an einen Einsatzort;
Lösen des Sockels von unter dem Wasserfahrzeug;
und beim Schritt des Lösens des Sockels von unter dem Wasserfahrzeug, Zulassen, dass die Turbine durch das Wasserfahrzeug gelangt.

2. Verfahren nach Anspruch 1, umfassend, beim Schritt des Befestigens des Sockels (12),
Aufstellen des Sockels (12) am Grund eines Gewässers;
Positionieren des Wasserfahrzeugs (14) über dem Sockel (12);
und Heben des Sockels (12) in Position unter dem Wasserfahrzeug (14).

3. Verfahren nach Anspruch 2, umfassend den Schritt des Befestigens einer oder mehrerer Hebeleinen (20) am Sockel (12), bevor der Sockel (12) am Grund des Gewässers aufgestellt wird.

4. Verfahren nach Anspruch 2 oder 3, umfassend, beim Schritt des Hebens des Sockels (12) in Position unter dem Wasserfahrzeug (14), das Nutzen von Lasttragmitteln (24) auf dem Wasserfahrzeug (14).

5. Verfahren nach einem der Ansprüche 1 bis 4, umfassend den weiteren Schritt des Hinzufügens von Ballast zum Sockel (12), nachdem der Sockel (12) unter dem Wasserfahrzeug (14) befestigt wurde.

6. Verfahren nach einem der Ansprüche 1 bis 5, umfassend das Befestigen der Halterung (32) am Sockel (12), nachdem der Sockel (12) unter dem Wasserfahrzeug (14) befestigt wurde.

7. Verfahren nach einem der Ansprüche 1 bis 6, umfassend den weiteren Schritt des Testens verschiedener Betriebsparameter des Sockels (12) und/oder der Turbine (10) an einem Testort, bevor der Sockel (12) am Einsatzort eingesetzt wird.

## Revendications

1. Procédé pour installer une turbine hydroélectrique (10) comprenant les étapes consistant à :
attacher une base (12) pour la turbine (10) sous un navire (14) ;
attacher la turbine (10) à un support (32) de la base (12) qui se projette vers le haut à travers le navire (14) ;
transporter le navire jusqu'à un site d'installation ;
détacher la base de dessous le navire ;
et dans l'étape de détachement de la base de dessous le navire, permettre à la turbine de traverser le navire.

2. Procédé conforme à la revendication 1, comprenant, dans l'étape consistant à attacher la base (12),
placer la base (12) sur le fond d'une étendue d'eau :
positionner le navire (14) au-dessus de la base (12) ;
et lever la base (12) en position sous le navire (14).

3. Procédé conforme à la revendication 2, comprenant l'étape consistant à attacher un ou plusieurs câbles de levage (20) à la base (12) avant de positionner la base (12) sur le fond de l'étendue d'eau.

4. Procédé conforme à la revendication 2 ou 3, comprenant, dans l'étape consistant à lever la base (12) en position sous le navire (14), utiliser des moyens porteurs (24) sur le navire (14).

5. Procédé conforme à une quelconque des revendications 1 à 4, comprenant l'étape supplémentaire consistant à ajouter du ballast à la base (12) après avoir attaché la base (12) sous le navire (14).

6. Procédé conforme à une quelconque des revendications 1 à 5, comprenant l'étape consistant à attacher le support (32) à la base (12) après avoir attaché la base (12) sous le navire (14).

7. Procédé conforme à une quelconque des revendications 1 à 6, comprenant l'étape supplémentaire consistant à essayer les divers paramètres d'exploitation de la base (12) et/ou de la turbine (10) à un emplacement d'essai avant d'installer la base (12) au site d'installation.
